# EUROPÄISCHE PATENTSCHRIFT

(11) **EP 3 084 370 B1**
(45) Veröffentlichungstag und Bekanntmachung des Hinweises auf die Patenterteilung: **18.05.2022**
(21) Anmeldenummer: 14812203.9
(22) Anmeldetag: 10.12.2014
(51) Int. Cl.: G01F 25/00, G01F 1/696, G01F 1/698, G01F 1/684

(54) **VORRICHTUNG UND VERFAHREN ZUM BESTIMMEN DES DURCHFLUSSES EINES MEDIUMS**
APPARATUS AND METHOD FOR DETERMINING THE FLOW RATE OF A MEDIUM
DISPOSITIF ET PROCÉDÉ SERVANT À DÉTERMINER LE DÉBIT D'UN FLUIDE

(30) Priorität: 19.12.2013 DE 102013114486
(43) Veröffentlichungstag der Anmeldung: 26.10.2016
(73) Patentinhaber: Innovative Sensor Technology IST AG, 9642 Ebnat-Kappel (CH)
(72) Erfinder: SCHÖNSTEIN, Thomas, 89130 Las Vegas, NV (US); SCHELL, Roger, CH-9650 Nesslau (CH); HEPP, Christoph, CH-9500 Wil (CH)
(74) Vertreter: Andres, Angelika Maria
(86) Internationale Anmeldenummer: PCT/EP2014/077203
(87) Internationale Veröffentlichungsnummer: WO 2015/091149

(56) Entgegenhaltungen:
- DE-A1- 4 208 135
- DE-A1- 10 202 210
- DE-A1-102005 057 687
- DE-A1-102005 057 689
- US-A1- 2003 041 664
- US-A1- 2009 049 907

## Beschreibung

Die Erfindung bezieht sich auf einen thermischen Strömungssensor sowie ein Verfahren zum Bestimmen des Durchflusses eines Mediums.

Zur Bestimmung von Strömungseigenschaften, insbesondere des Durchflusses, eines Mediums bzw. eines Fluides sind thermische Messgeräte bekannt, die ausnutzen, dass ein (strömendes) Medium Wärme transportiert. Derartige Strömungssensoren weisen dabei den klassischen Strukturaufbau mit zumindest einem Heizelement und zumindest einem Temperatursensor auf, um den Durchfluss des Mediums zu bestimmen.

Bekannt sind aus dem Stand der Technik so genannte Anemometer, bei denen die Heizleistung derartig geregelt wird, dass sich eine vorbestimmte Temperatur an dem mindestens einen Temperatursensor aufgrund des Wärmetransports des Mediums einstellt. Anhand der zugeführten geregelten Heizleistung lässt sich der Durchfluss des Mediums bestimmen. Ein Beispiel für ein solches Anemometer ist beispielsweise in der US 20030041664 A1 offenbart.

Ferner sind aus dem Stand der Technik so genannte kalorimetrische Strömungssensoren bekannt, die mittels zweier Temperatursensoren und eines zwischen den beiden Temperatursensoren liegenden Heizelementes den Durchfluss des Mediums ermitteln. Hierbei wird das Medium an dem Heizelement erwärmt bzw. erhitzt und die Temperaturdifferenz zwischen den beiden Temperatursensoren bestimmt, um so den Durchfluss des Mediums zu erhalten. Bei dieser Methode wird die dem Heizelement zugeführte Heizleistung nicht geregelt. Die vorliegende Erfindung bezieht sich auf derartige kalorimetrische Strömungssensoren.

Aufgrund von Layout- und Fertigungstoleranzen, sowie Inhomogenitäten in Substrat und Schichtaufbau sind die auf einem Substrat ausgebildeten Temperatursensoren thermisch und/oder elektrisch nicht hundertprozentig stabil, was für einen exakten Nullpunkt nötig wäre. Diese Abweichung des Nullpunkts, also der Nullpunktoffset, kann durchaus bis hundert Prozent vom eigentlichen Messwert liegen. Insbesondere bei mikrofluidischen Anwendungen, die einen sehr kleinen Messbereich von 1 ml/min und weniger aufweisen, ist ein genauer und temperaturstabiler Nullpunkt von großer Bedeutung, da dieser nur Bruchteile vom Messbereich abweichen darf.

Um diesen Nullpunkt entsprechend abzugleichen sind aus dem Stand der Technik im Wesentlichen zwei Abgleichmethoden bekannt. Bei der ersten Abgleichmethode wird mittels Lasertrimmen der Temperatursensoren die Widerstandsbrücke, die typischerweise zum Auswerten der Temperatursensoren dient, abgeglichen. Nachteilig dabei ist, dass das Lasertrimmen nicht auf allen Substraten bzw. auf allen Layern des Strömungssensors angewendet werden kann. Die zweite Methode stellte einen elektronischen Abgleich in der Form dar, dass im Signalpfad der Sensorelektronik eine Offsetkorrektur durchgeführt wird, so dass bei einem Durchfluss von Null das Messsignal im Wesentlichen ebenfalls Null ist. Nachteilig an dieser Methode ist, dass eine gewünschte Temperaturstabilität bzw. Temperaturunabhängigkeit im Nullpunkt nur bedingt gegeben ist.

Der Erfindung liegt die Aufgabe zugrunde, den Abgleich des Nullpunktes eines Strömungssensors zu optimieren.

Die Aufgabe wird durch einen thermischen Strömungssensor und durch ein Verfahren zum Bestimmen des Durchflusses eines Mediums gelöst.

Hinsichtlich des Strömungssensors wird die Aufgabe durch einen thermischen Strömungssensor gemäß Anspruch 1 gelöst.

Durch die dem ersten Heizelement zugeführte erste Heizleistung und die dem zweiten Heizelement zugeführte zweite Heizleistung, die in dem Abgleichbetrieb vorab bestimmt wurden, lässt sich der Nullpunkt des Strömungssensors im Wesentlichen auf null verschieben bzw. abgleichen.

Hierzu werden erfindungsgemäß zwei nebeneinander liegende oder auch teilweise überlappende Heizelemente unterschiedlich stark beheizt, so dass sich das Temperaturprofil über der Sensorstruktur flussabwärts oder flussaufwärts verschieben lässt, um den Nullpunkt entsprechend anzupassen.

Somit wird ein direkter physikalischer Abgleich ermöglicht, der die Heizelemente thermisch balanciert und somit den Nullpunkt bei einem Durchfluss von null, ebenfalls auf null abgleicht. Im Gegensatz zu dem eingangs beschriebenen elektronischen Abgleichverfahren, bei dem im Signalpfad der Sensorelektronik eine Offsetkorrektur erfolgt, gewährleistet dieser direkte physikalische Abgleich eine ausgezeichnete Temperaturstabilität bzw. Temperaturunabhängigkeit im Nullpunkt.

Ferner gewährleistet der direkte physikalische Abgleich eine sehr hohe Präzision von mindestens 10ppm vom Messbereich und der Abgleichbereich kann zwischen ca. 10% - 1000% vom Messbereich liegen. Eine derartige Performance kann mit den aus dem Stand der Technik bekannten Abgleichverfahren, wie bspw. Lasertrimmen nicht erreicht werden.

Unter einem thermischen Strömungssensor werden im Folgenden die aus dem Stand der Technik bekannten thermischen Strömungssensoren als auch Wärmeleitungssensoren verstanden.

Eine vorteilhafte Ausgestaltung sieht vor, dass der erste und zweite beheizbare Temperatursensor oder das erste und zweite Heizelement derartig auf dem Substrat ausgebildet sind, dass sie aneinander liegen oder zumindest teilweise überlappen. Durch das Anordnen der beiden beheizbaren Temperatursensoren oder der beiden Heizelemente in der Form, dass diese sich überlappen, also ineinander verzahnt sind, oder sich zumindest teilweise berühren lässt sich die Auflösung der Offsetkompensation steigern.

Eine weitere vorteilhafte Ausgestaltung sieht vor, dass die beheizbaren Temperatursensoren aus einem temperaturabhängigen Widerstandsmaterial sind und die Auswerteeinheit die Temperaturdifferenz anhand eines Temperaturkoeffizienten des temperaturabhängigen Widerstandsmaterials ermittelt.

Eine alternative Ausgestaltung sieht vor, dass das erste und zweite Heizelement aus einem im Wesentlichen temperaturunabhängigen und/oder temperaturabhängigen Widerstandsmaterial sind und die Auswerteeinheit die Temperaturdifferenz zwischen dem ersten und dem zweiten Temperatursensor ermittelt. Insbesondere sieht die Ausgestaltung vor, dass die beiden Heizelemente jeweils aus einem im Wesentlichen temperaturunabhängigen Widerstandsmaterial oder jeweils aus einem temperaturabhängigen Widerstandsmaterial sind. Denkbar ist auch eine Ausgestaltung bei der einer der beiden Heizelemente aus einem temperaturunabhängigen Widerstandsmaterial und das andere Heizelement aus einem temperaturabhängigen Widerstandsmaterial ist.

Eine weitere vorteilhafte Ausgestaltung sieht vor, dass die Speiseeinheit den ersten und zweiten beheizbaren Temperatursensor oder das erste und zweite Heizelement jeweils individuell ansteuert, so dass die den jeweiligen Temperatursensoren bzw. den jeweiligen Heizelementen zugeführten Heizleistungen individuell voneinander einstellbar sind.

Eine weitere vorteilhafte Ausgestaltung sieht vor, dass das erste und zweite Signal ein kontinuierliches Signal oder ein diskretes Signal oder eine Mischung aus kontinuierlichem und diskretem Signal ist.

Eine weitere vorteilhafte Ausgestaltung sieht vor, dass die Speiseeinheit während des Messbetriebes die erste Heizleistung und die zweite Heizleistung unabhängig von der Temperaturdifferenz bereitstellt. In anderen Worten, werden die erste und die zweite Heizleistung, nach dem sie einmalig ermittelt wurden, an den ersten und zweiten beheizbaren Temperatursensor bzw. das erste und zweite Heizelement konstant angelegt, d.h. es findet keine Regelung der Heizleistungen auf die Temperaturdifferenz statt.

Eine weitere vorteilhafte Ausgestaltung sieht vor, dass das erste und zweite Signal jeweils ein pulsweitenmoduliertes Signal ist und die Speiseeinheit über die Ein-Aus-Verhältnisse der pulsweitenmodulierten Signale die erste Heizleistung und die zweite Heizleistung einstellt.

Eine weitere vorteilhafte Ausgestaltung sieht vor, dass die ersten und zweiten Temperatursensoren als Thermoelemente, Widerstandstemperatursensoren, NTC-Widerstände, Strahlungssensoren oder Halbleiterelemente ausgebildet sind. Als Widerstandstemperatursensoren werden dabei diverse aus Metall ausgebildeten Sensoren verstanden, die zur Ermittlung der Temperatur geeignet sind verstanden, wie bspw. Pt-Widerstandssensoren oder auch Ni-Widerstandssensoren.

Hinsichtlich des Verfahrens wird die Aufgabe durch ein Verfahren gemäß Anspruch 10 gelöst.

Eine vorteilhafte Ausführungsform des Verfahrens sieht vor, dass als erstes und zweites Signal zum Zuführen der ersten und zweiten Heizleistung jeweils ein kontinuierliches Signal oder ein diskretes Signal oder eine Mischung aus kontinuierlichem und diskretem Signal verwendet wird.

Eine weitere vorteilhafte Ausführungsform des Verfahrens sieht vor, dass als erstes und zweites Signal jeweils ein pulsweitenmoduliertes Signal verwendet wird.

Die Erfindung wird anhand der nachfolgenden Zeichnungen näher erläutert. Es zeigt:
Fig. 1: eine schematische Darstellung einer ersten Ausgestaltung des erfindungsgemäßen Sensors,
Fig. 2: ein Blockschaltbild zur ersten Ausgestaltung des Sensors,
Fig. 3: eine schematische Darstellung einer zweiten Ausgestaltung des erfindungsgemäßen Sensors, und
Fig. 4: ein Blockschaltbild zur zweiten Ausgestaltung des Sensors.

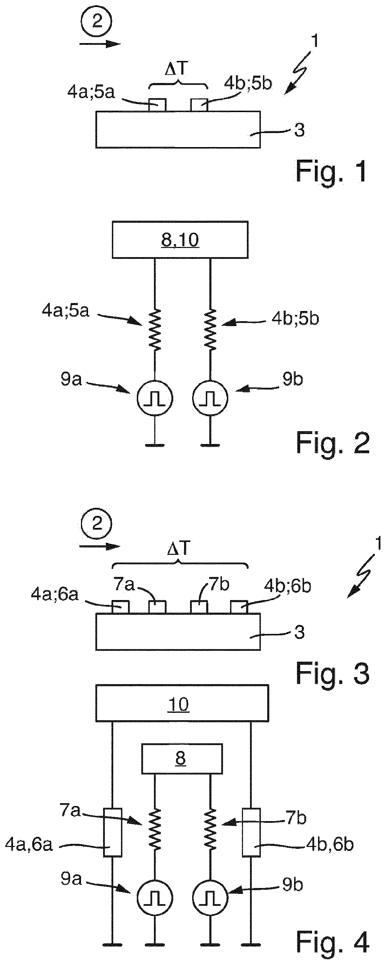

Figur 1 zeigt beispielhaft eine schematische Darstellung einer ersten Ausgestaltung des erfindungsgemäßen Sensors. Der Sensor ist dabei auf einem Substrat 3, bspw. einem Polymersubstrat, aufgebaut. Auf diesem Substrat 3 sind zumindest zwei beheizbare Temperatursensoren 5a und 5b aufgebracht. In dieser Ausgestaltung dienen die beheizbaren Temperatursensoren 5a und 5b sowohl als Heizelemente als auch als "eigentliche" Temperatursensoren 4a und 4b. Die beiden beheizbaren Temperatursensoren 5a und 5b werden mittels eines ersten Signals 9a und eines zweiten Signals 9b angesteuert bzw. mit einer für die Erwärmung des Mediums 2 notwendigen Heizleistung beaufschlagt. Hierfür wird dem ersten beheizbaren Temperatursensor 5a das erste Signal 9a und dem zweiten beheizbaren Temperatursensor 5b das zweite Signal 9b zugeführt. Die Temperatursensoren 4 werden typischerweise mittels Dünnschichtverfahren auf das Substrat aufgebracht. Die beheizbaren Temperatursensoren 5a und 5b sind bei der ersten Ausführungsform aus einem Material mit einem temperaturabhängigen Widerstandsmaterial bspw. aus Platin oder Nickel, ausgebildet. Aufgrund des temperaturabhängigen Widerstandsmaterials lässt sich ein für den Temperatursensor spezifischer Temperaturkoeffizient bestimmen. Anhand dieses spezifischen Temperaturkoeffizienten kann somit eine Auswerteeinheit die Temperatur des ersten und zweiten Temperatursensors und somit die Temperaturdifferenz bestimmen. Typischerweise wird diese Bestimmung rechnerisch durchgeführt. Somit dienen bei der ersten Ausgestaltung die beiden Temperatursensoren 4 zum einen als Heizelemente und zum anderen auch gleichzeitig als "eigentliche" Temperatursensoren.

Fig. 2 zeigt ein schematisches Blockschaltbild für die erste Ausgestaltung des Sensors 1. Hierbei werden der erste und zweite beheizbare Temperatursensor mit einem pulsweitenmodulierten Signal, dass als erstes Signal 9a und als zweites Signal 9b dient, beaufschlagt. Zur Beaufschlagung dient die Speiseeinheit 8 und zur Auswertung der Temperaturdifferenz ΔT eine Auswerteeinheit 10. Die Auswerteeinheit 10 ermittelt in Abhängigkeit der beiden Signale 9a, 9b und dem bekannten Temperaturkoeffizienten des Widerstandsmaterials die Temperaturdifferenz ΔT. Anhand dieser ermittelten Temperaturdifferenz ΔT lässt sich dann ein Messwert, der den Durchfluss des Mediums 2 repräsentiert, bestimmen. Sowohl die Speiseinheit 8 als auch die Auswerteinheit 10 können durch jeweils ggfl. durch einen einzigen Mikroprozessor realisiert sein, die bzw. der die beiden Funktionen (Speisung und Auswertung) erfüllt.

Fig. 3 zeigt beispielhaft eine schematische Darstellung einer zweiten Ausgestaltung des erfindungsgemäßen Sensors 1. Bei dieser Ausgestaltung sind zwei nicht-beheizbare Temperatursensoren 6a, 6b und zwei zusätzliche Heizelemente 7a und 7b vorgesehen.

Die Temperatursensoren 6a und 6b sind bspw. aus temperaturempfindlichen Widerstandsstrukturen oder auch Thermopiles bzw. Thermosäulen. Die beiden Temperatursensoren 6a und 6b sind so auf dem Substrat 3 angeordnet, dass sich ein Temperatursensor 6b flussaufwärts (engl.: upstream) und der andere Temperatursensor 6a flussabwärts (engl.: downstream) befindet. Auf diese Weise kann neben der Strömungsgeschwindigkeit auch die Durchflussrichtung detektiert werden. Typischerweise werden derartige Temperatursensoren 6 mittels einer Widerstandsbrücke ausgewertet, um die Temperaturdifferenz ΔT zwischen den beiden Temperatursensoren 6 zu erhalten. Über den Abgleichvorgang werden die erste und zweite Heizleistung so gewählt, dass das erste und zweite Heizelement 7a und 7b unterschiedlich stark beheizt werden, so dass der temperaturabhängige Widerstand der beiden Temperatursensoren (bei keinem Durchfluss) im Wesentlichen gleich ist. In anderen Worten, wird ein Abgleich des Nullpunktes des Strömungssensors durchgeführt, so dass der Nullpunkt bei einem Durchfluss von null ebenfalls null ist und sich ein Messwert von im Wesentlichen gleich null ergibt.

Fig. 4 zeigt ein Blockschaltbild für die zweite Ausgestaltung des Sensors 1. Das erste und das zweite Heizelement 7a und 7b werden im Messbetrieb über das im Abgleichbetrieb ermittelte erste Signal 9a und das zweite Signal 9b mit einer ersten und zweiten Heizleistung beaufschlagt. Hierfür beaufschlagt die Speiseeinheit 8 das erste und zweite Heizelement 7a und 7b jeweils individuell mit dem ersten bzw. dem zweiten Signal 9a, 9b. Auf diese Weise wird das Temperaturfeld über den beiden Heizelementen 7 derartig verschoben, dass die Widerstandswerte der beiden Temperatursensoren 6 solche Werte annehmen, dass die Widerstandsbrücke, die zur Bestimmung der Temperaturdifferenz ΔT dient, abgeglichen ist. Die Auswerteeinheit kann beispielsweise ein Mikroprozessor oder auch ein Analogverstärker sein.

Bei der Herstellung kommt es, wie eingangs beschrieben und unabhängig von der Ausgestaltung des Strömungssensors, aufgrund von Layout- und Fertigungstoleranzen sowie Inhomogenitäten im Substrat 3 zu Asymmetrien zwischen den beiden Temperatursensoren 4, was dazu führt, dass es bei der Bestimmung des Durchflusses des Mediums 2 anhand des ersten Signals 9a und des zweiten Signal 9b zu ungewünschten Abweichungen (Nullpunktoffset) kommt. Dies ist auf die unterschiedlichen Widerstandswerte der beiden beheizbaren Temperatursensoren zurückzuführen und hat zur Folge, dass auch bei Stillstand des Mediums 2, d.h. kein Fluss des Mediums 2, ein Messwert ungleich Null erkannt wird. Um diesen Nachteil Abhilfe zu leisten, wird der Sensor 1 einem Abgleichvorgang unterzogen.

Für diesen Abgleich wird der Sensor 1 in einen Abgleichbetrieb gebracht, in dem das Medium 2 nicht strömt. In dem Abgleichbetrieb, wird dem ersten beheizbaren Temperatursensor eine erste Heizleistung und dem zweiten beheizbaren Temperatursensor eine zweite Heizleistung zugeführt. Diese Heizleistungen werden solange variiert, bis es über den beiden Heizelementen zu einer im Wesentlichen symmetrischen Temperaturverteilung bzw. Temperaturfeld kommt und somit der Messwert des Sensors im Wesentlichen gleich Null ist. In anderen Worten, wird ein thermischer Abgleich der beiden Heizelemente durchgeführt, so dass die erste und zweite Heizleistung, die dem ersten und zweiten Heizelement zugeführt werden, unterschiedlich sind, um so einen Offsetabgleich der beiden Heizelemente zu erzielen. Die auf diese Weise im Abgleichbetrieb ermittelten Heizleistungen werden anschließend in dem Sensor hinterlegt und für den Messbetrieb des Strömungssensors verwendet.

Eine Speiseeinheit, in Fig. 1 nicht dargestellt, beaufschlagt dann, im eigentlichen Messbetrieb des Strömungssensors, das erste Heizelement mit dem ersten Signal und das zweite Heizelement mit dem zweiten Signal, so dass dem ersten Heizelement die zuvor, d.h. im Abgleichbetrieb, bestimmte erste Heizleistung und dem zweiten Heizelement, die zuvor bestimmte zweite Heizleistung, zugeführt wird.

Der thermische Abgleich kann bspw. mit einem kontinuierlichen und/oder diskret einstellbaren elektrischen Strom, einer elektrischen Spannung oder einer Mischung aus Strom und Spannung erfolgen. Ferner ist ein Pulsverfahren von elektrischen Strömen und/oder Spannungen denkbar. Als besonders praktikabel hat sich ein pulsweitenmoduliertes Signal erwiesen, da sich diese über das Tastverhältnis bzw. den Tastgrad sehr fein einstellen lässt. Zusätzlich kann die Verlustleistung der beiden Heizelemente sehr gering gehalten werden. Eine weiter Möglichkeit besteht darin, dass pulsmodulierte Signal mit einem kontinuierlichen Signal zu überlagern, so dass ein Großteil des notwendigen Offsetabgleichs über das kontinuierliche Signal durchgeführt wird und der Rest über das sehr fein bzw. exakt einstellbare pulsweitenmodulierte Signal möglich ist.

### Bezugszeichenliste

- 1: Thermischer Strömungssensor
- 2: Medium
- 3: Substrat
- 4: Temperatursensor
- 5a, 5b: Beheizbarer Temperatursensor
- 6a, 6b: Nicht-beheizbarer Temperatursensor
- 7a, 7b: Heizelement
- 8: Speiseeinheit
- 9a, 9b: Signale
- 10: Auswerteeinheit
- ΔT: Temperaturdifferenz

## Patentansprüche

1. Thermischer Strömungssensor (1) zur Bestimmung des Durchflusses eines Mediums (2), aufweisend:
- ein Substrat (3);
- ein auf dem Substrat (3) angeordneter erster und zweiter Temperatursensor (4a, 4b), wobei der erste und zweite Temperatursensor (4a, 4b) als beheizbarer Temperatursensor (5a, 5b), welcher sowohl als Heizelement als auch als Sensor zur Messung der Temperatur dient, oder als ein erster nicht-beheizbarer Temperatursensor (6a, 6b), dem ein erstes Heizelement (7a) zugeordnet ist, und als ein zweiter nicht-beheizbarer Temperatursensor (6b), dem ein zweites Heizelement (7b) zugeordnet ist, ausgebildet sind;
- eine Speiseeinheit (8), die ausgeführt ist, mittels eines ersten Signals (9a) dem ersten beheizbaren Temperatursensor (5a) oder dem ersten Heizelement (7a) eine während eines Abgleichbetriebes, in welchem Abgleichbetrieb der Durchfluss des Mediums (2) im Wesentlichen auf null gebracht bzw. gehalten wird, vorab bestimmte erste Heizleistung zuzuführen und mittels eines zweiten Signals (9b) dem zweiten beheizbaren Temperatursensor (5b) oder dem zweiten Heizelement (7b) eine im Abgleichbetrieb vorab bestimmte zweite Heizleistung zuzuführen, so dass es im Abgleichbetrieb über den beiden beheizbaren Temperatursensoren (5a, 5b) bzw. den beiden Heizelementen (7a, 7b) zu einer im Wesentlichen symmetrischen Temperaturverteilung kommt;
- eine Auswerteeinheit (10), die ausgeführt ist, in einem Messbetrieb zur Bestimmung des Durchflusses des Mediums (2) den ersten beheizbaren Temperatursensor (5a) oder das erste Heizelement (7a) mit der im Abgleichbetrieb ermittelten ersten Heizleistung und den zweiten beheizbaren Temperatursensor (5b) oder das zweite Heizelement (7b) mit der im Abgleichbetrieb ermittelten zweiten Heizleistung zu beaufschlagen, und eine Temperaturdifferenz (ΔT) zwischen dem ersten Temperatursensor (4a) und dem zweiten Temperatursensor (4b) zu ermitteln und anhand der Temperaturdifferenz (ΔT) einen Messwert, der den Durchfluss des Mediums (2) repräsentiert, zu bestimmen.

2. Strömungssensor nach Anspruch 1, wobei der erste und zweite beheizbare Temperatursensor (5a, 5b) oder das erste und zweite Heizelement (7a; 7b) derartig auf dem Substrat (3) ausgebildet sind, dass sie aneinander liegen oder sich zumindest teilweise überlappen.

3. Strömungssensor nach Anspruch 1 oder 2, wobei die beheizbaren Temperatursensoren (5a, 5b) aus einem temperaturabhängigen Widerstandsmaterial sind und die Auswerteeinheit (10) die Temperaturdifferenz (ΔT) anhand eines Temperaturkoeffizienten des temperaturabhängigen Widerstandsmaterials ermittelt.

4. Strömungssensor nach Anspruch 1 oder 2, wobei das erste und zweite Heizelement (7a, 7b) aus einem im Wesentlichen temperaturunabhängigen und/oder temperaturabhängigen Widerstandsmaterial sind und die Auswerteeinheit (10) die Temperaturdifferenz (ΔT) zwischen dem ersten und dem zweiten Temperatursensor (4a, 4b) ermittelt.

5. Strömungssensor nach einem oder mehreren der vorhergehenden Ansprüche, wobei die Speiseeinheit (8) den ersten und zweiten beheizbaren Temperatursensor (5a, 5b) oder das erste und zweite Heizelement (7a, 7b) jeweils individuell ansteuert.

6. Strömungssensor nach einem oder mehreren der vorhergehenden Ansprüche, wobei das erste und zweite Signal (9a, 9b) ein kontinuierliches Signal oder ein diskretes Signal oder eine Mischung aus kontinuierlichem und diskretem Signal ist.

7. Strömungssensor nach einem oder mehreren der vorhergehenden Ansprüche, wobei die Speiseeinheit (8) während des Messbetriebes die erste Heizleistung und die zweite Heizleistung unabhängig von der Temperaturdifferenz (ΔT) bereitstellt.

8. Strömungssensor nach einem oder mehreren der vorhergehenden Ansprüche, wobei das erste und zweite Signal (9a, 9b) jeweils ein pulsweitenmoduliertes Signal ist und die Speiseeinheit (8) über die Ein-Aus-Verhältnisse der pulsweitenmodulierten Signale die erste Heizleistung und die zweite Heizleistung einstellt.

9. Strömungssensor nach einem oder mehreren der vorhergehenden Ansprüche, wobei die ersten und zweiten nicht-beheizbaren Temperatursensoren (6a, 6b) als Thermoelemente, Widerstandstemperatursensoren, NTC-Widerstände, Strahlungssensoren oder Halbleiterelemente ausgebildet sind.

10. Verfahren zum Bestimmen des Durchflusses eines Mediums (2) mit einem thermischen Strömungssensor (1),der nach einem der Ansprüche 1 bis 9 ausgebildet ist, umfassend die Schritte:
- Abgleich des Strömungssensors (1), wobei zum Abgleich der Strömungssensor (1) in einen Abgleichbetrieb gebracht wird, in dem der Durchfluss des Mediums (2) im Wesentlichen auf null gebracht bzw. gehalten wird, um die dem ersten beheizbaren Temperatursensor (5a) oder dem ersten Heizelement (7a) zuzuführende erste Heizleistung und die dem zweiten beheizbaren Temperatursensor (5b) oder dem zweiten Heizelement (7b) zuzuführende zweite Heizleistung zu ermitteln, wobei die erste und zweite Heizleistung derartig ermittelt werden, dass bei Beaufschlagung des ersten beheizbaren Temperatursensors (5a) oder des ersten Heizelements (7a) mit der ersten Heizleistung und bei Beaufschlagung des zweiten beheizbaren Temperatursensors (5b) oder des zweiten Heizelements (7b) mit der zweiten Heizleistung es über den beiden beheizbaren Temperatursensoren (5a, 5b) bzw. den beiden Heizelementen (7a, 7b) zu einer im Wesentlichen symmetrischen Temperaturverteilung kommt und das Messsignal des Strömungssensors (1) im Wesentlichen null ist;
- Messen des Durchflusses des strömenden Mediums, wobei zum Messen des Durchflusses der Strömungssensor (1) in einen Messbetrieb gebracht wird und in dem Messbetrieb das dem ersten beheizbaren Temperatursensor (5a) oder dem ersten Heizelement (7a) mit der beim Abgleichbetrieb ermittelten ersten Heizleistung und das dem zweiten beheizbaren Temperatursensor (5b) oder dem zweiten Heizelement (7a) mit der beim Abgleichbetrieb ermittelten zweiten Heizleistung beaufschlagt werden, so dass eine Temperaturdifferenz (ΔT) zwischen dem ersten Temperatursensor (4a) und dem zweiten Temperatursensor (4b) ermittelbar ist und anhand der Temperaturdifferenz (ΔT) der Durchfluss des Mediums (4) bestimmt wird.

11. Verfahren nach Anspruch 10, wobei als erstes und zweites Signal (9a, 9b) zum Zuführen der ersten und zweiten Heizleistung jeweils ein kontinuierliches Signal oder ein diskretes Signal oder eine Mischung aus kontinuierlichem und diskretem Signal verwendet wird.

12. Verfahren nach Anspruch 10 oder 11, wobei als erstes und zweites Signal (9a, 9b) jeweils ein pulsweitenmoduliertes Signal verwendet wird.

## Claims

1. Thermal flow sensor (1) designed to determine the flow of a medium, wherein said sensor comprises:
- a substrate (3);
- a first and a second temperature sensor (4a, 4b) arranged on the substrate (3), wherein the first and the second temperature sensor (4a, 4b) are designed as heatable temperature sensors (5a, 5b), which serve as both a heating element and as a sensor to measure the temperature, or as a first non-heatable temperature sensor (6a, 6b) to which a first heating element (7a) is assigned and as a second non-heatable temperature sensor (6b) to which a second heating element (7b) is assigned;
- a feed unit, which, using a first signal (9a), is designed to supply a first heating power to the first heatable temperature sensor (5a) or to the first heating element (7a), said heating power being predefined during a calibration mode in which the flow of the medium (2) is essentially brought to zero or held at zero, and, using a second signal (9b), is designed to supply a second heating power to the second heatable temperature sensor (5b) or to the second heating element (7b), said heating power being determined in the calibration mode in advance in such a way that, in the calibration mode, there is an essentially symmetrical temperature distribution over the two heatable temperature sensors (5a, 5b) or the two heating elements (7a, 7b);
- an evaluation unit (10), which is designed to apply - during a measuring mode for the purpose of determining the flow of the medium (2) - the first heating power determined during the calibration mode to the first heatable temperature sensor (5a) or the first heating element (7a) and to apply the second heating power determined during the calibration mode to the second heatable temperature sensor (5b) or the second heating element (7b), and to determine a temperature difference (ΔT) between the first temperature sensor (4a) and the second temperature sensor (4b) and to determine, using the temperature difference (ΔT), a measured value that represents the flow of the medium (2).

2. Flow sensor as claimed in Claim 1, wherein the first and the second heatable temperature sensors (5a, 5b) or the first and the second heating element (7a, 7b) are formed on the substrate (3) in such a way that they are adjacent to one another or at least partially overlap.

3. Flow sensor as claimed in Claim 1 or 2, wherein the heatable temperature sensors (5a, 5b) are made from a temperature-dependent resistance material and the evaluation unit (10) determines the temperature difference (ΔT) using a temperature coefficient of the temperature-dependent resistance material.

4. Flow sensor as claimed in Claim 1 or 2, wherein the first and the second heating element (7a, 7b) are made from a resistance material that is essentially independent of the temperature and/or dependent on the temperature, and the evaluation unit (10) determines the temperature difference (ΔT) between the first and the second temperature sensor (4a, 4b).

5. Flow sensor as claimed in one or more of the previous claims, wherein the feed unit individually controls the first and the second heatable temperature sensor (5a, 5b) or the first and the second heating element (7a, 7b).

6. Flow sensor as claimed in one or more of the previous claims, wherein the first and the second signal (9a, 9b) is/are a continuous signal or a discrete signal or a mixture of continuous and discrete signals.

7. Flow sensor as claimed in one or more of the previous claims, wherein the feed unit provides the first heating power and the second heating power during the measuring mode, independently of the temperature difference (ΔT).

8. Flow sensor as claimed in one or more of the previous claims,
wherein the first and second signal (9a, 9b) are each a pulse-width modulated signal and wherein the feed unit regulates the first heating power and the second heating power via the on-off ratio of the pulse width modulated signals.

9. Flow sensor as claimed in one or more of the previous claims, wherein the first and second non-heatable temperature sensors (6a, 6b) are thermocouples, resistance temperature sensors, NTC resistors, radiation sensors or semiconductor elements.

10. Procedure for determining the flow of a medium (2) with a thermal flow sensor (1), which is designed according to one of the Claims 1 to 9, said procedure comprising the following steps:
- Calibration of the flow sensor (1), wherein, for the purpose of calibration, the flow sensor is set to a calibration mode in which the flow of the medium (2) is essentially set to or held at zero to determine the first heating power to be supplied to the first heatable temperature sensor (5a) or to the first heating element (7a) and the second heating power to be supplied to the second heatable temperature sensor (5b) or to the second heating element (7b), wherein the first and the second heating power are determined in such a way that when the first heating power is applied to the first heatable temperature sensor (5a) or the first heating element (7a) and when the second heating power is applied to the second heatable temperature sensor (5b) or second heating element (7b), an essentially symmetrical temperature distribution occurs over the two heatable temperature sensors (5a, 5b) or the two heating elements (7a, 7b) and that the measuring signal of the flow sensor (1) is essentially zero;
- Measurement of the flow of the flowing medium, wherein for the purpose of measuring the flow the flow sensor (1) is set to a measuring mode and, in the measuring mode, the first heating power determined during the calibration mode is applied to the first heatable temperature sensor (5a) or the first heating element (7a) and the second heating power determined during the calibration mode is applied to the second heatable temperature sensor (5b) or the second heating element (7a) such that a temperature difference (ΔT) can be determined between the first temperature sensor (4a) and the second temperature sensor (4b) and the flow of the medium (4) is determined using the temperature difference (ΔT).

11. Procedure as claimed in Claim 10, wherein a continuous signal or a discrete signal or a mixture or continuous and discrete signals is used as the first and second signal (9a, 9b) to supply the first and second heating power.

12. Procedure as claimed in Claim 10 or 11, wherein a pulse width modulated signal is used as the first and second signal (9a, 9b).

## Revendications

1. Capteur de débit thermique (1) destiné à la détermination du débit d'un produit, lequel capteur comprend :
- un substrat (3) ;
- un premier et un deuxième capteur de température (4a, 4b) disposés sur le substrat (3), le premier et le deuxième capteur de température (4a, 4b) servant de capteurs de température chauffants (5a, 5b), qui servent à la fois comme élément chauffant et de capteur pour mesurer la température, ou comme un premier capteur de température non chauffant (6a, 6b) auquel est associé un premier élément chauffant (7a) et comme un deuxième capteur de température non chauffant (6b) auquel est associé un deuxième élément chauffant (7b) ;
- une unité d'alimentation (8), laquelle est conçue de manière à fournir, au moyen d'un premier signal (9a), au premier capteur de température chauffant (5a) ou au premier élément chauffant (7a), une première valeur de température pendant un mode d'étalonnage, mode d'étalonnage dans lequel le débit du produit (2) est amené ou maintenu pour l'essentiel à zéro, et, au moyen d'un deuxième signal (9b), à fournir au deuxième capteur de température chauffant (5b) ou au deuxième élément chauffant (7b) une deuxième puissance de chauffage déterminée au préalable en mode d'étalonnage, de sorte que, en mode d'étalonnage, on obtient une répartition de température sensiblement symétrique sur les deux capteurs de température chauffants (5a, 5b) ou les deux éléments chauffants (7a, 7b) ;
- une unité d'exploitation (10), laquelle est conçue de manière à alimenter, dans un mode de mesure en vue de déterminer le débit du produit (2), le premier capteur de température chauffant (5a) ou le premier élément chauffant (7a) avec la première puissance de chauffage déterminée dans le mode d'étalonnage et le deuxième capteur de température chauffant (5b) ou le deuxième élément chauffant (7b) avec la deuxième puissance de chauffage déterminée dans le mode d'étalonnage, et à déterminer une différence de température (ΔT) entre le premier capteur de température (4a) et le deuxième capteur de température (4b) et à déterminer, à l'aide de la différence de température (ΔT), une valeur de mesure qui représente le débit du produit (2).

2. Capteur de débit selon la revendication 1, pour lequel le premier et le deuxième capteur de température chauffants (5a, 5b) ou le premier et le deuxième élément chauffant (7a, 7b) sont formés sur le substrat (3) de telle sorte qu'ils sont adjacents ou se chevauchent au moins partiellement.

3. Capteur de débit selon la revendication 1 ou 2, pour lequel les capteurs de température chauffants (5a, 5b) sont constitués d'un matériau résistif dépendant de la température et l'unité d'exploitation (10) détermine la différence de température (ΔT) à l'aide d'un coefficient de température du matériau résistif dépendant de la température.

4. Capteur de débit selon la revendication 1 ou 2, pour lequel le premier et le deuxième élément chauffant (7a, 7b) sont constitués d'un matériau résistif pour l'essentiel indépendant de la température et/ou dépendant de la température, et l'unité d'exploitation (10) détermine la différence de température (ΔT) entre le premier et le deuxième capteur de température (4a, 4b).

5. Capteur de débit selon l'une ou plusieurs des revendications précédentes, pour lequel l'unité d'alimentation (8) commande individuellement le premier et le deuxième capteur de température chauffant (5a, 5b) ou le premier et le deuxième élément chauffant (7a, 7b).

6. Capteur de débit selon l'une ou plusieurs des revendications précédentes, pour lequel, concernant le premier et le deuxième signal (9a, 9b), il s'agit d'un signal continu ou d'un signal discret ou d'un mélange de signaux continus et discrets.

7. Capteur de débit selon l'une ou plusieurs des revendications précédentes, pour lequel l'unité d'alimentation (8) fournit la première puissance de chauffage et la deuxième puissance de chauffage pendant le mode de mesure, indépendamment de la différence de température (ΔT).

8. Capteur de débit selon l'une ou plusieurs des revendications précédentes, pour lequel, concernant le premier et le deuxième signal (9a, 9b), il s'agit d'un signal à modulation de largeur d'impulsion et
pour lequel l'unité d'alimentation (8) règle la première puissance de chauffage et la deuxième puissance de chauffage par l'intermédiaire des rapports marche-arrêt des signaux à modulation de largeur d'impulsion.

9. Capteur de débit selon l'une ou plusieurs des revendications précédentes, pour lequel les premiers et deuxièmes capteurs de température non chauffants (6a, 6b) sont des thermocouples, des thermistances, des résistances CTN, des capteurs de rayonnement ou des éléments semi-conducteurs.

10. Procédé destiné à la détermination du débit d'un produit (2) avec un capteur de débit thermique (1), lequel est conçu selon l'une des revendications 1 à 9, lequel procédé comprend les étapes suivantes :
- Étalonnage du capteur de débit (1), le capteur de débit, en vue de l'étalonnage, étant amené dans un mode d'étalonnage dans lequel le débit du produit est amené ou maintenu sensiblement à zéro, afin de déterminer la première puissance de chauffage à acheminer au premier capteur de température chauffant (5a) ou au premier élément chauffant (7a) et la deuxième puissance de chauffage à acheminer au deuxième capteur de température chauffant (5b) ou au deuxième élément chauffant (7b), la première et la deuxième puissance de chauffage étant déterminées de telle sorte que, lorsque le premier capteur de température chauffant (5a) ou le premier élément chauffant (7a) est alimenté avec la première puissance de chauffage et lorsque le deuxième capteur de température chauffant (5b) ou le deuxième élément chauffant (7b) est alimenté avec la deuxième puissance de chauffage, on obtient une répartition de température sensiblement symétrique sur les deux capteurs de température chauffants (5a, 5b) ou les deux éléments chauffants (7a, 7b) et que le signal de mesure du capteur de débit (1) est sensiblement nul ;
- Mesure du débit du produit en écoulement, le capteur de débit (1) étant mis en mode de mesure pour mesurer le débit et, en mode de mesure, le premier capteur de température chauffant (5a) ou le premier élément chauffant (7a) étant alimenté par la première puissance de chauffage déterminée lors du mode d'étalonnage et le deuxième capteur de température chauffant (5b) ou le deuxième élément chauffant (7a) étant alimenté par la deuxième puissance de chauffage déterminée lors du mode d'étalonnage, de sorte qu'une différence de température (ΔT) entre le premier capteur de température (4a) et le deuxième capteur de température (4b) peut être déterminée et que le débit du produit (4) est déterminé à l'aide de la différence de température (ΔT).

11. Procédé selon la revendication 10, pour lequel on utilise respectivement un signal continu ou un signal discret ou un mélange de signaux continus et discrets comme premier et deuxième signal (9a, 9b) pour fournir la première et la deuxième puissance de chauffage.

12. Procédé selon la revendication 10 ou 11, pour lequel on utilise comme premier et deuxième signal (9a, 9b) respectivement un signal modulé en largeur d'impulsion.
